# EUROPEAN PATENT SPECIFICATION

(11) **EP 4 564 537 B1**
(45) Date of publication and mention of the grant of the patent: **08.04.2026**
(21) Application number: 24210631.8
(22) Date of filing: 04.11.2024
(51) Int. Cl.: H01M 10/658, H01M 50/209

(54) **BATTERY MODULE**
BATTERIEMODUL
MODULE DE BATTERIE

(30) Priority: 28.11.2023 KR 20230167803
(43) Date of publication of application: 04.06.2025
(73) Proprietor: SAMSUNG SDI CO., LTD., Yongin-si, Gyeonggi-do 17084 (KR)
(72) Inventor: KIM, Jung Soo, 16678 Suwon-si (KR); PARK, Jun Hwa, 16678 Suwon-si (KR); KIM, Beom Joo, 16678 Suwon-si (KR); JEON, Du Seong, 16678 Suwon-si (KR)
(74) Representative: Marks & Clerk LLP

(56) References cited:
- JP-A- 2021 009 787
- US-A1- 2021 184 307
- US-A1- 2021 344 062
- US-B2- 11 302 988

## Description

### BACKGROUND

### 1. Field

A battery module is disclosed.

### 2. Discussion of Related Art

Secondary batteries are batteries that can be charged and discharged unlike non-rechargeable primary batteries. Small-capacity secondary batteries are used in small, portable electronic devices such as smartphones, feature phones, laptops, digital cameras, and camcorders, and large-capacity secondary batteries are widely used as motor driving power sources and power storage batteries of hybrid cars or electric cars. A secondary battery may include an electrode assembly including a positive electrode and a negative electrode, a case accommodating the electrode assembly, and electrode terminals connected to the electrode assembly.

The above-described information disclosed in the technology that forms the background of the present disclosure is only intended to improve understanding of the background of the present disclosure, and thus may include information that does not constitute the related art.

US2021/344062A1 discloses a power supply device includes a plurality of battery cells, and a plurality of separators configured to insulate adjacent battery cells. Each of the separators includes an interposed plate disposed between adjacent battery cells, a heat insulating member having a sheet-like shape and disposed between interposed plate and adjacent battery cells, and a peripheral wall protruding from the interposed plate toward adjacent battery cells.

JP2021009787A discloses a power supply unit including an outer can which has a square outer shape and includes a pair of main surfaces, a plurality of battery cells each including a sealing plate constituting one surface of the outer can and a pair of electrode terminals provided on the sealing plate, and one or more separators interposed between the plurality of battery cells.

### SUMMARY

Embodiments are directed to a battery module including a housing, a plurality of battery cells each disposed in the housing and comprising a first surface and a second surface that intersect each other, at least one first insulating member facing the first surface of the battery cell, and at least one second insulating member extending from the at least one first insulating member and facing the second surface of the battery cell. The battery cell further comprises a vent disposed on the second surface and configured to be opened and closed in association with a change in an internal pressure of the battery cell. At least a portion of the at least one second insulating member faces the vent and the at least one second insulating member comprises a first extension extending from the at least one first insulating member and facing the second surface of any one battery cell of the battery cells neighboring each other. A second extension extends in an opposite direction from the first extension and faces the second surface of the other battery cell of the battery cells neighboring each other, and a third extension extends from the first extension and faces the vent of any one battery cell of the battery cells neighboring each other.

An implementation may include the plurality of battery cells being arranged in a first direction, and the first surface intersecting the first direction.

An implementation may include an area of the at least one first insulating member being larger than an area of the first surface.

An implementation may include the at least one first insulating member comprising an aerogel, glass fibers, carbon fibers, or ceramic fibers.

An implementation may include a thickness of the at least one first insulating member being larger than or equal to 1 mm and smaller than or equal to 4 mm.

An implementation may include the at least one first insulating member comprising a plurality of first insulating members, the at least one second insulating member comprising a plurality of second insulating members, and each second insulating member of the plurality of second insulating members extending from one first insulating member of the plurality of first insulating members.

An implementation may include the plurality of second insulating members being spaced apart from each other.

An implementation may include the first extension and the second extension extending from an end of the at least one first insulating member.

An implementation may include an area of each of the first extension and the second extension being smaller than an area of the second surface.

An implementation may include an area of the third extension being larger than an area of the vent.

An implementation may include the at least one second insulating member further comprising a rupturing groove concavely formed in an outer side surface of the third extension.

An implementation may include the rupturing groove being disposed at both surfaces of the third extension.

An implementation may include the rupturing groove having a width that narrows toward an end.

An implementation may include a fire extinguishing member disposed in the at least one second insulating member and configured to supply a fire extinguishing agent to the battery cell in response to the battery cell being heated to a predetermined temperature or higher.

An implementation may include the fire extinguishing member comprises a plurality of fire extinguishing capsules filled with the fire extinguishing agent.

An implementation may include the battery cell further comprising a third surface opposite to the second surface, and the battery module further comprising a third insulating member extending from the first insulating member and disposed to face the third surface.

An implementation may include the third insulating member having both sides each facing the third surface of one of the battery cells neighboring each other.

An implementation may include the third insulating member extending from an end of the at least one first insulating member.

An implementation may include a plurality of first and second insulating member pairs, the first insulating members of the pairs being disposed between respective adjacent battery cells such that the housing contains first insulating members and battery cells in alternating arrangement.

An implementation may have the first and second surfaces substantially orthogonal to each other.

In an implementation the first and second insulating members may be substantially planar members, arranged in substantially orthogonal planes.

### BRIEF DESCRIPTION OF THE DRAWINGS

Features will become apparent to those of skill in the art by describing in detail embodiments with reference to the attached drawings in which:
FIG. 1 is an exploded perspective view illustrating a configuration of a battery module according to one embodiment of the present disclosure.
FIG. 2 is a plan view illustrating a configuration of the battery module.
FIG. 3 is a lateral view illustrating a configuration of the battery module.
FIG. 4 is a cross-sectional view of FIG. 2 along the X-axis direction.
FIG. 5 is a perspective view illustrating a configuration of a battery cell.
FIG. 6 is a cross-sectional view illustrating a configuration of the battery cell.
FIG. 7 is a view illustrating configurations of a first insulating member and a second insulating member.
FIG. 8 is a lateral view illustrating a configuration of a second insulating member.
FIG. 9 is an enlarged view illustrating a configuration of the second insulating member.
FIG. 10 is a plan view illustrating a configuration of a battery module.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey implementations to those skilled in the art.

In the drawing figures, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

Herein, some embodiments of the present disclosure will be described, in further detail, with reference to the accompanying drawings. The terms or words used in this specification and claims should not be construed as being limited to the usual or dictionary meaning and should be interpreted as meaning and concept consistent with the technical idea of the present disclosure based on the principle that the inventor can be his/her own lexicographer to appropriately define the concept of the term.

The embodiments described in this specification and the configurations shown in the drawings are provided as some example embodiments of the present disclosure. Accordingly, it is to be understood that there may be various equivalents and modifications that may replace or modify the embodiments described herein at the time of filing this application within the scope of the appended claims.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are "substantially the same." Thus, the phrase "substantially the same" may include a case having a deviation that is considered low in the art, for example, a deviation of 5% or less. **In** addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

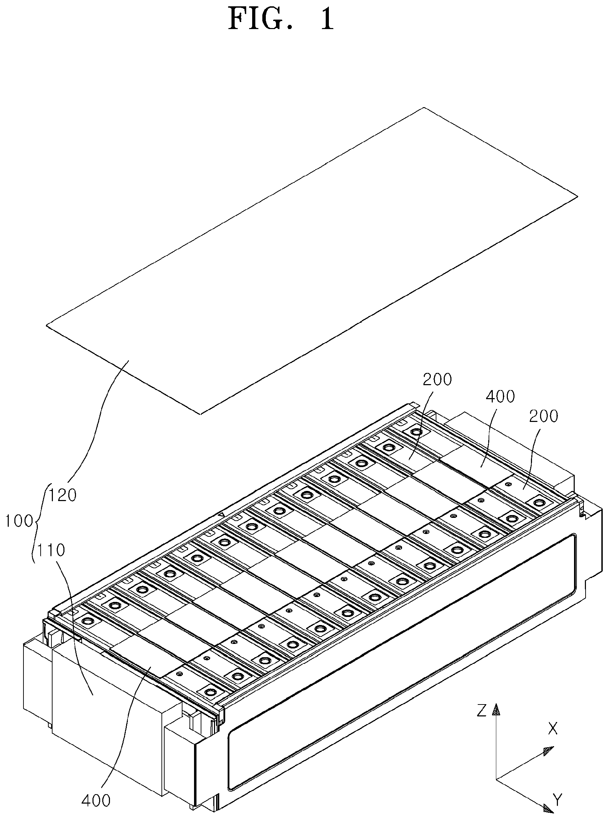

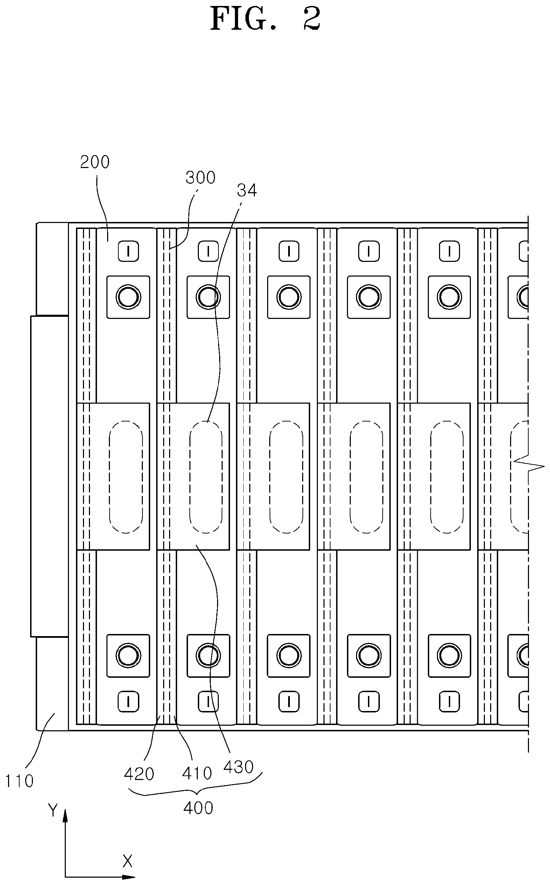

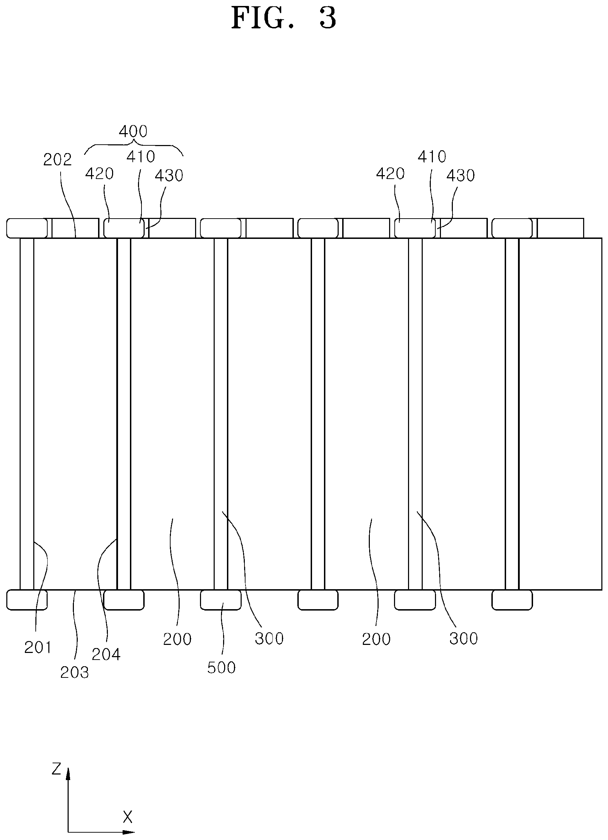

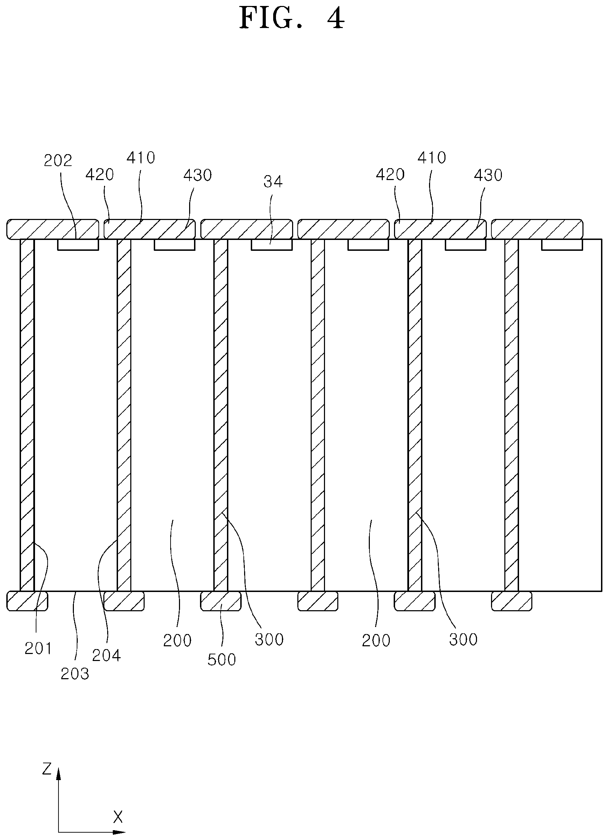

FIG. 1 is an exploded perspective view illustrating a configuration of a battery module, FIG. 2 is a plan view illustrating a configuration of the battery module, FIG. 3 is a lateral view illustrating a configuration of the battery module, and FIG. 4 is a cross-sectional view of FIG. 2 along the X-axis direction.

Referring to FIGS. 1 to 4, a battery module according to the present embodiment includes a housing 100, a battery cell 200, a first insulating member 300, and a second insulating member 400.

The housing 100 may serve as a component that forms an overall exterior of the battery module and supports the battery cell 200, the first insulating member 300, and the second insulating member 400. The housing 100 may include a housing body 110 and a housing cover 120.

The housing body 110 may have the shape of a box that is hollow and have an open upper side. A cross-sectional shape of the housing body 110 may be quadrangular as illustrated in FIG. 1 but may be changed to various other shapes.

The housing cover 120 may open and close an inner space of the housing body 110. The housing cover 120 may be substantially plate-shaped and may face the open upper side of the housing body 110. The housing cover 120 may be detachably coupled to the housing body 110 by various coupling methods such as bolting and fitting. The battery cell 200 may serve as a unit structure that stores and supplies power in the battery module.

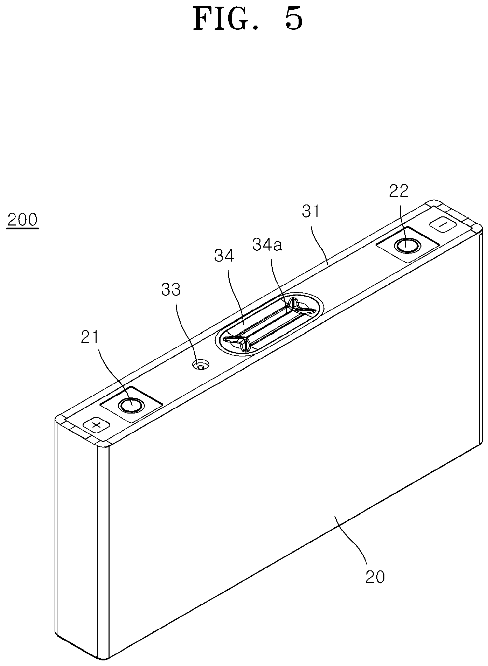

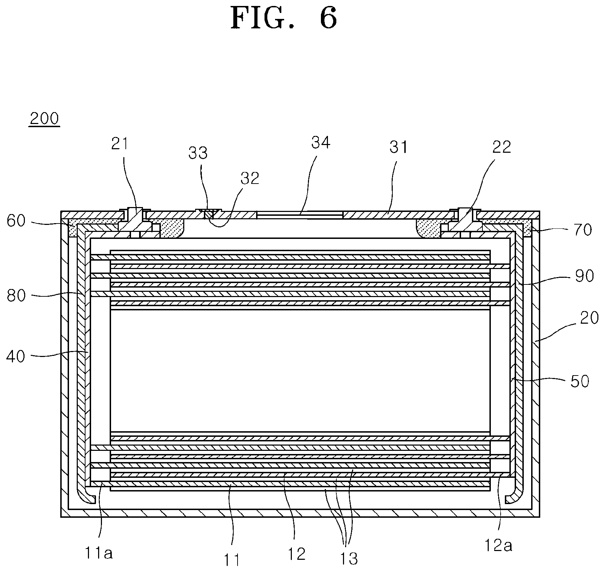

FIG. 5 is a perspective view illustrating a configuration of a battery cell, and FIG. 6 is a cross-sectional view illustrating a configuration of the battery cell.

Referring to FIGS. 5 and 6, the battery cell 200 may include at least one electrode assembly that is wound after a separator 13, which is an insulator, is interposed between a positive electrode 11 and a negative electrode 12, a case 20 in which the electrode assembly is embedded, and a cap assembly coupled to an opening of the case 20.

An example in which the battery cell 200 is a lithium ion secondary battery having a prismatic shape will be described. The battery cell 200 may also be a lithium polymer battery or a cylindrical battery.

The positive electrode 11 and the negative electrode 12 may each include a coating portion which may be a region coated with an active material on a current collector formed of a thin metal foil and may respectively include plain portions 11a and 12a which may be regions not coated with an active material.

The positive electrode 11 and the negative electrode 12 may be wound after the separator 13, which is an insulator, is interposed therebetween. The electrode assembly may also be formed in a stacked structure in which the positive electrode and the negative electrode, which may be formed of a plurality of sheets, may be alternately stacked with the separator disposed therebetween.

The case 20 forms an overall exterior of the battery cell 200 and may be formed of a conductive metal such as aluminum, an aluminum alloy, or nickel-plated steel. Also, the case 20 may provide a space in which the electrode assembly is accommodated.

The cap assembly may include a cap plate 31 covering the opening of the case 20, and the case 20 and the cap plate 31 may be made of a conductive material. Here, a positive electrode terminal 21 and a negative electrode terminal 22 electrically connected respectively to the positive electrode 11 and the negative electrode 12 may be installed to pass through the cap plate 31 and protrude to an outer side.

Also, outer peripheral surfaces of upper columns of the positive electrode terminal 21 and the negative electrode terminal 22 that may protrude to the outer side of the cap plate 31 may be screw-machined and fixed to the cap plate 31 by a nut.

The positive electrode terminal 21 and the negative electrode terminal 22 may be formed of a rivet structure and rivet-coupled or may be welded and coupled to the cap plate 31.

Also, the cap plate 31 may be formed of a thin plate and coupled to the opening of the case 20, an electrolyte inlet 32 on which a sealing stopper 33 may be installed may be formed in the cap plate 31, and a vent 34 having a notch 34a formed therein may be installed in the cap plate 31.

The vent 34 may be opened and closed in association with a change in an internal pressure of the case 20. That is, the vent 34 may remain closed and seal the case 20 during normal operation of the electrode assembly. As the internal pressure of the case 20 increases to a predetermined level or more due to overcharging or occurrence of fire, the vent 34 may be opened to allow flame, gas, and the like in the case 20 to be discharged to the outside of the case 20.

The positive electrode terminal 21 and the negative electrode terminal 22 may be electrically connected to current collectors including a first current collector 40 and a second current collector 50 (hereinafter referred to as "positive electrode current collector 40" and "negative electrode current collector 50") respectively joined by welding to the plain portion 11a of the positive electrode and the plain portion 12a of the negative electrode.

In an implementation, the positive electrode terminal 21 and the negative electrode terminal 22 may be respectively coupled by welding to the positive electrode current collector 40 and the negative electrode current collector 50. The positive electrode terminal 21, the negative electrode terminal 22, the positive electrode current collector 40, and the negative electrode current collector 50 may be formed by being integrally coupled.

Also, an insulating member may be installed between the electrode assembly and the cap plate 31. Here, the insulating member may include a first lower insulating member 60 and a second lower insulating member 70, and each of the first lower insulating member 60 and the second lower insulating member 70 may be installed between the electrode assembly and the cap plate 31.

Also, one end of a separating member that may be installed opposite to one side surface of the electrode assembly may be installed between the insulating member and the positive electrode terminal 21 or the negative electrode terminal 22. Here, the separating member may include a first separating member 80 and a second separating member 90.

Accordingly, one end of the first separating member 80 that may be installed opposite to one side surface of the electrode assembly may be installed between the first lower insulating member 60 and the positive electrode terminal 21, and one end of the second separating member 90 that may be installed opposite to one side surface of the electrode assembly may be installed between the second lower insulating member 70 and the negative electrode terminal 22.

As a result, the positive electrode terminal 21 welded and coupled to the positive electrode current collector 40 may be coupled to the first lower insulating member 60 and one end of the first separating member 80, and the negative electrode terminal 22 welded and coupled to the negative electrode current collector 50 may be coupled to the second lower insulating member 70 and one end of the second separating member 90.

The battery cell 200 may be a plurality of battery cells 200. The plurality of battery cells 200 may be disposed in the housing 100. The plurality of battery cells 200 may be arranged in a first direction in the housing 100. Here, the first direction may indicate a direction parallel to the X-axis based on FIG. 1. The number of battery cells 200 may be various other numbers according to the size or the like of the battery module. The battery cell 200 may include a first surface 201, a second surface 202, a third surface 203, and a fourth surface 204.

The first surface 201 and the fourth surface 204 may be surfaces that are disposed perpendicular to the first direction among peripheral surfaces of the battery cell 200, more specifically, the case 20. In an implementation, the first surface 201 and the fourth surface 204 may be a pair of surfaces that are perpendicular to the X-axis direction based on FIG. 1 and face each other while being parallel to each other among the peripheral surfaces of the battery cell 200. The first surface 201 of any one battery cell 200 of the pair of battery cells 200 neighbor each other in the first direction in the housing 100 and the fourth surface 204 of the other battery cell 200 may face each other.

The second surface 202 may be an upper surface of the battery cell 200, that is, an upper surface of the cap plate 31 that faces a lower surface of the housing cover 120 and has the vent 34 formed therein.

The third surface 203 is a surface opposite to the second surface 202 and may be a lower surface of the battery cell 200, that is, a lower surface of the case 20 that faces an upper surface of the housing body 110.

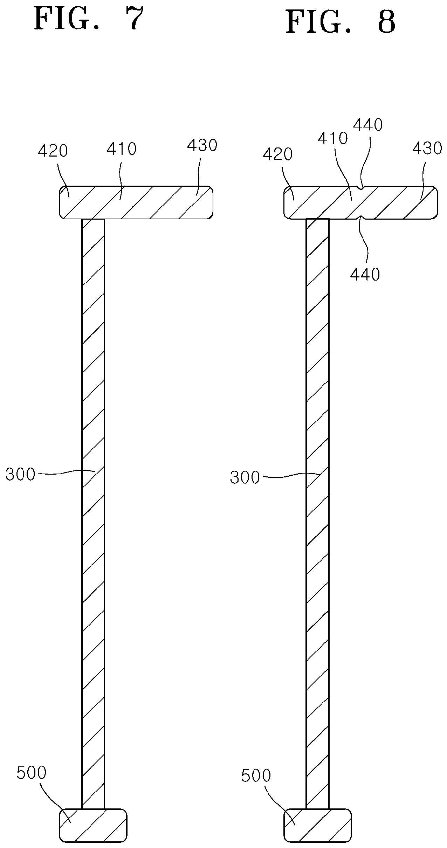

FIG. 7 is a view illustrating configurations of a first insulating member and a second insulating member.

Referring to FIGS. 1 to 7, the first insulating member 300 may face the first surface 201 of the battery cell 200. The first insulating member 300 may be provided as a plurality of first insulating members 300. Each of the plurality of first insulating members 300 may face the first surface 201 of one battery cell 200. Any one first insulating member 300 among the plurality of first insulating members 300 may face the first surface 201 of the battery cell 200 disposed at one end among the plurality of battery cells 200 arranged in the first direction. Each of the other first insulating members 300, excluding the corresponding first insulating member 300, may be between a pair of battery cells 200 neighboring each other.

The first insulating member 300 may be formed of an insulating material having excellent insulation performance. Here, the insulating material may include an aerogel, glass fibers, carbon fibers, and ceramic fibers. Accordingly, the first insulating member 300 may block heat transfer between the first surface 201 of any one of the pair of battery cells 200 neighboring each other and the fourth surface 204 of the other to decrease a heat transfer capacity between adjacent battery cells 200 and prevent and delay thermal runaway in a heating situation.

A cross-sectional shape of the first insulating member 300 may have a shape that corresponds to a cross-sectional shape of the first surface 201 and the fourth surface 204. An area of the first insulating member 300 may be larger than an area of the first surface 201 and the fourth surface 204. In an implementation, the first insulating member 300 may have the shape of a substantially rectangular sheet. A width of the first insulating member 300 that is parallel to the Y-axis direction may be 200 mm or more, and a height of the first insulating member 300 that is parallel to the Z-axis direction may be 100 mm or more.

A thickness of the first insulating member 300 that is parallel to the X-axis direction may be larger than or equal to 1 mm and smaller than or equal to 4 mm. When the thickness of the first insulating member 300 is less than 1 mm, heat transfer blocking performance between neighboring battery cells 200 may be excessively degraded. When the thickness of the first insulating member 300 is larger than 4 mm, an energy density of the battery module may be excessively lowered.

The second insulating member 400 may extend from the first insulating member 300 and may face the second surface 202 of the battery cell 200. That is, the second insulating member 400 may serve as a component that secures insulation and heat resistance for the second surface 202 of the battery cell 200. At least a portion of the second insulating member 400 may face the vent 34 of the battery cell 200. Accordingly, when thermal runaway occurs in any one battery cell 200, the second insulating member 400 may block heat transfer to the second surface 202 of an adjacent battery cell 200 and block introduction of flame or gas into the vent 34 of the adjacent battery cell 200 to prevent successive thermal runaway in the battery cells 200.

The second insulating member 400 may be integrally connected to an upper end of the first insulating member 300. The second insulating member 400 may be seated on the second surface 202 of the battery cell 200 and then pressed and fixed to the second surface 202 by the housing cover 120 or a busbar holder. Accordingly, the second insulating member 400 may prevent displacement of the first insulating member 300 in an up-down direction and prevent the first insulating member 300 from being separated from the battery cell 200 to improve reliability. Also, the first insulating member 300 and the second insulating member 400 may be integrally connected to further simplify an assembly process for the battery cell 200.

The second insulating member 400 may be formed of a polymer material including epoxy, polyurethane, and a silicone elastomer. The second insulating member 400 may be produced in the form of a slurry and then integrally coupled to the upper end of the first insulating member 300 that is fixed to a jig or the like by dispensing and curling processes.

A thickness of the second insulating member 400 that is parallel to the Z-axis direction may be larger than or equal to 1 mm and smaller than or equal to 4 mm. When the thickness of the second insulating member 400 is less than 1 mm, heat transfer blocking performance between neighboring battery cells 200 may be excessively degraded. When the thickness of the second insulating member 400 is larger than 4 mm, an energy density of the battery module may be excessively lowered.

The second insulating member 400 may be provided as a plurality of second insulating members 400. Each of the plurality of second insulating members 400 may be connected to one of the first insulating members 300 and may extend from one of the first insulating members 300. The plurality of second insulating members 400 may be spaced apart from each other. Accordingly, when thermal runaway occurs in any one battery cell 200, the second insulating member 400 disposed to face the second surface 202 of the corresponding battery cell 200 may be separated from the battery cells 200, independently from the other second insulating members 400, to prevent degradation in the insulation performance of the other battery cells 200. The second insulating member 400 may include a first extension 410, a second extension 420, and a third extension 430.

The first extension 410 may face the second surface 202 of any one battery cell 200 of neighboring battery cells 200. In an implementation, within the entire region of the second insulating member 400, the first extension 410 may be a region that extends toward the second surface 202 of any one battery cell 200 of the battery cells 200 neighboring each other based on the first insulating member 300. The first extension 410 may extend from the upper end of the first insulating member 300 in a direction parallel to the first direction. An area of the first extension 410 may be smaller than an area of the second surface 202 of the battery cell 200. Accordingly, the first extension 410 may be prevented from interfering with the neighboring second insulating member 400 or with the positive electrode terminal 21 and the negative electrode terminal 22.

The second extension 420 may face the second surface 202 of the other battery cell 200 of the neighboring battery cells 200. In an implementation, within the entire region of the second insulating member 400, the second extension 420 may be a region that extends toward the second surface 202 of the other battery cell 200 of the battery cells 200 neighboring each other based on the first insulating member 300. The second extension 420 may extend from the upper end of the first insulating member 300 in a direction that is parallel to the first direction and opposite to a direction in which the first extension 410 extends. An area of the second extension 420 may be smaller than an area of the second surface 202 of the battery cell 200. Accordingly, the second extension 420 may not interfere with the neighboring second insulating member 400 or with the positive electrode terminal 21 and the negative electrode terminal 22.

The third extension 430 may extend from the first extension 410 and may face the vent 34 of any one battery cell 200 of neighboring battery cells 200. In an implementation, within the entire region of the second insulating member 400, the third extension 430 may be a region that extends from the first extension 410 and seals the vent 34. An area of the third extension 430 may be larger than an area of the vent 34. The battery module may further include a third insulating member 500.

The third insulating member 500 may extend from the first insulating member 300 and may face the third surface 203 of the battery cell 200. In an implementation, the third insulating member 500 may serve as a component that secures insulation and heat resistance for the third surface 203 of the battery cell 200. A material of the third insulating member 500 may be the same as the material of the second insulating member 400.

The third insulating member 500 may be integrally connected to a lower end of the first insulating member 300. Both sides of the third insulating member 500 may extend in directions opposite to each other based on the lower end of the first insulating member 300 and may each face the third surface 203 of one of the battery cells 200 neighboring each other. The third insulating member 500 may be seated on the third surface 203 of the battery cell 200 and then pressed and fixed to the third surface 203 by the upper surface of the housing body 110. Accordingly, by the second insulating member 400 and the third insulating member 500 being respectively fixed to the second surface 202 and the third surface 203 of the battery cell 200, displacement of the first insulating member 300 in the up-down direction can be more effectively prevented.

The third insulating member 500 may be produced in the form of a slurry and then integrally coupled to the lower end of the first insulating member 300 that is fixed to a jig or the like by dispensing and curling processes.

A thickness of the third insulating member 500 that is parallel to the Z-axis direction may be larger than or equal to 1 mm and smaller than or equal to 4 mm. When the thickness of the third insulating member 500 is less than 1 mm, heat transfer blocking performance between neighboring battery cells 200 may be excessively degraded. When the thickness of the third insulating member 500 is larger than 4 mm, an energy density of the battery module may be excessively lowered. Hereinafter, a battery module according to another embodiment of the present disclosure will be described.

The battery module may be the same as the battery module according to one embodiment of the present disclosure described above with reference to FIGS. 1 to 7 except for a detailed configuration of the second insulating member 400.

Accordingly, in describing the battery module according to the present embodiment, only the detailed configuration of the second insulating member 400 that has not been described above in describing the battery module according to one embodiment of the present disclosure will be described. The description of the battery module according to one embodiment of the present disclosure may be applied without change to the remaining configurations of the battery module according to the present embodiment.

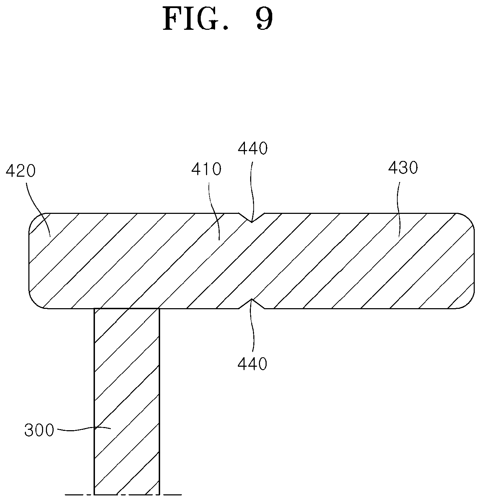

FIG. 8 is a lateral view illustrating a configuration of a second insulating member, and FIG. 9 is an enlarged view illustrating a configuration of the second insulating member. Referring to FIGS. 8 and 9, the second insulating member 400 according to the present embodiment may further include a rupturing groove 440.

The rupturing groove 440 may have the shape of a groove concavely formed in an outer side surface of the third extension 430. In an implementation, the rupturing groove 440 may serve as a component that induces rupture of the third extension 430 by pressure of flame or gas discharged from the vent 34 when the vent 34 is open. Accordingly, the rupturing groove 440 may facilitate discharge of flame or gas from the battery cell 200 in which thermal runaway has occurred.

The rupturing groove 440 may be formed so that a width thereof narrows toward an end. Accordingly, when the vent 34 is open, pressure applied to the third extension 430 may be concentrated on an end region of the rupturing groove 440, and thus the third extension 430 may be more easily ruptured. The position of the rupturing groove 440 may be changed to various other positions within the entire region of the third extension 430 as long as the rupturing groove 440 is disposed to face the vent 34.

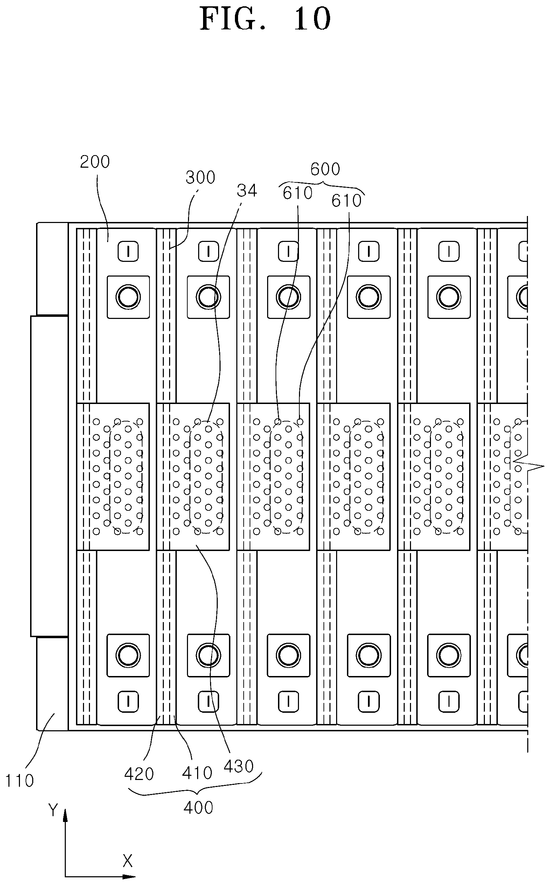

The rupturing groove 440 may be provided as a pair of rupturing grooves 440. The pair of rupturing grooves 440 may be disposed at both surfaces, that is, an upper surface and a lower surface, of the third extension 430. FIG. 10 is a plan view illustrating a configuration of a battery module. Referring to FIG. 10, the battery module according to the present embodiment may further include a fire extinguishing member 600.

The battery module according to the present embodiment may be the same as the battery module according to one embodiment of the present disclosure described above with reference to FIGS. 1 to 7 or the battery module according to another embodiment of the present disclosure described above with reference to FIGS. 8 and 9 except for further including the fire extinguishing member 600.

Accordingly, in describing the battery module according to the present embodiment, only a detailed configuration of the fire extinguishing member 600 that has not been described above will be described. The description of the battery module according to one embodiment of the present disclosure or the battery module according to another embodiment of the present disclosure may be applied without change to the remaining configurations of the battery module according to the present embodiment.

The fire extinguishing member 600 may be disposed in the second insulating member 400 and may supply a fire extinguishing agent to the battery cell 200 in response to the battery cell 200 being heated to a predetermined temperature or higher. In an implementation, the fire extinguishing member 600 may serve as a component that, when a fire occurs in a battery cell 200, supplies a fire extinguishing agent to the vent 34 of the corresponding battery cell 200 to promptly extinguish the fire at an early stage. The fire extinguishing member 600 may include a plurality of fire extinguishing capsules 610 filled with the fire extinguishing agent.

One or more fire extinguishing capsules 610 may be disposed in the third extensions 430 of different second insulating members 400. The shapes of the fire extinguishing capsules 610 may be spherical as illustrated in FIG. 10 but may be changed to various other shapes as long as the fire extinguishing capsules 610 can accommodate the fire extinguishing agent therein.

The fire extinguishing capsules 610 may be integrated with the second insulating member 400 by being mixed in the form of a slurry together with the second insulating member 400 during manufacture of the second insulating member 400.

The fire extinguishing capsules 610 may include a material that can be easily ruptured due to an external impact or a material that has meltability and can easily melt due to heat.

A mixture thereof may be used as the fire extinguishing agent filled in the fire extinguishing capsules 610 including fluorine carbon, fluorine chlorine carbon, a fluorine bromine carbon-based halogen carbon, a fluorine iodine carbon-based halogen carbon, 2-iodine-1,1,1,2,3,3,3-heptafluoropropane (HFC- 227ea) and iodofluorocarbon (FIC-217I1 or FIC-13I1), 1,1,1,2,2-pentafluoroethane (CF3CF2H, HFC-125), 1,1,1,2,3,3,3-heptafluoropropane (CF3CHFCF3: HFC227ea), chlorotetrafluoroethane (CHClFCF3), a fluorine compound-based ketone compound, dodecafluoro-2-methylpentan-3-one (FK-5-1-12, CF3CF2C(O)CF(CF3)2)), 1-chloro-1,2,2,2-tetrafluoroethane (C2HClF4), 2-chloro-1,1,1,2-tetrafluoroethane (CHClFCF3, HCFC-124), decafluoro-cyclohexanone (perfluoro cyclohexanone), CF3CF2C(O)CF(CF3)2(-1,1,1,2,4,4,5,5,5-nonafluoro-2-trifluoromethyl-butan-3-one), (CF3)2CFC(O)CF(CF3)2(-1,1,1,2,4,5,5,5,6,6,6,-octafluoro-2,4,-bis(trifluoromethyl)pentan-3-one), CF3CF2C(O)CF2CF2CF3, CF3C(O)CF(CF3)2, 1,1,1,3,3,4,4,5,5,6,6,7,7,8,8,8,-hexadodecafluorooctan-2-one (CF3CF2CF2CF2CF2CF2C(O)CF3), 1,1,1,3,4,4,4,-heptafluoro-3-trifluoromethylbutan-2-one (CF3C(O)CF(CF3)2), 1,1,1,2,4,4,5,5,-octafluoro-2-trifluoromethylpentan-3-one (HCF2CF2C(O)CF(CF3)2), 1,1,1,2,4,4,5,5,6,6,6,-undecafluoro-2-trifluoromethylhexanoic acid-3-one (CF3CF2CF2C(O)CF(CF3)2), 1-chloro-,1,1,3,4,4,4-hexfluoro-3-trifluoromethyl-butan-2-one ((CF3)2CFC(O)CF2CL), 1,1,1,2,2,4,4,5,5,6,6,6-dodecafluorohexanoic acid-3-one (CF3CF2C(O)CF2CF2CF3), 1,1,1,5,5,5,-hexafluoropentan-2-4-dione (CF3C(O)CH2C(O)CF3), 1,1,1,2,5,6,6,6-octafluoro-2,5-bis(trifluoromethyl)hexanoic acid-3,4-dione ((CF3)2CFC(O)C(O)C(O)CF(CF3)2), 1,1,1,2,2,3,3,5,5,6,6,7,7,7,-tetradecafluoroheptan-4-one (CF3CF2CF2C(O)CF2CF2CF3), 1,1,1,3,3,4,4,4-octafluorobutan-2-one (CF3C(O)CF2CF3), 1,1,2,2,4,5,5,5-octafluoro-1-trifluoromethoxy-4-trifluoromethylpentan-3-one (CF3OCF2CF2C(O)CF(CF3)2), 1,1,1,2,4,4,5,5,6,6,7,7,7,-tridecafluoro-2-trifluoromethylheptan-3-one (CF3CF2CF2CF2C(O)CF(CF3)2).

A first insulating member between neighboring battery cells can decrease a heat transfer capacity between adjacent battery cells and prevent and delay thermal runaway in a heating situation.

When thermal runaway occurs in any one battery cell, a second insulating member facing a vent of the battery cell blocks introduction of flame or gas into a vent of an adjacent battery cell. In this way, successive thermal runaway in the battery cells can be prevented.

The second insulating member is integrally connected to the first insulating member and thus prevents displacement of the first insulating member in an up-down direction due to an external impact, vibration, or the like and prevents the first insulating member from being separated from a battery cell. In this way, reliability of a battery module can be improved.

When a fire occurs in any one battery cell, the fire can be promptly extinguished at an early stage by a fire extinguishing member. In this way, successive ignition of battery cells can be prevented.

However, the effects obtainable through the present disclosure are not limited to the above effects, and other technical effects that are not mentioned will be clearly understood by those skilled in the art from the following description of the present disclosure.

While the present disclosure has been described with reference to embodiments shown in the drawings, these embodiments are merely illustrative and it should be understood that various modifications and equivalent other embodiments can be derived by those skilled in the art on the basis of the embodiments within the scope of the appended claims.

Therefore, the technical scope of the present disclosure should be defined by the appended claims.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the claims.

## Claims

1. A battery module comprising:
a housing (100);
a plurality of battery cells (200) each disposed in the housing (100) and comprising a first surface (201) and a second surface (202) that intersect each other;
at least one first insulating member (300) facing the first surface (201) of the battery cell (200); and
at least one second insulating member (400) extending from the at least one first insulating member (300) and facing the second surface (202) of the battery cell (200),
the battery cell (200) further comprising a vent (34) disposed on the second surface (202) and configured to be opened and closed in association with a change in an internal pressure of the battery cell (200); and
at least a portion of the at least one second insulating member (400) faces the vent (34); **characterized in that**
the at least one second insulating member (400) comprises:
a first extension (410) extending from the at least one first insulating member (300) and facing the second surface (202) of any one battery cell of the battery cells (200) neighboring each other;
a second extension (420) extending in an opposite direction from the first extension (410) and facing the second surface (202) of the other battery cell of the battery cells (200) neighboring each other; and
a third extension (430) extending from the first extension (410) and facing the vent (34) of any one battery cell of the battery cells neighboring each other.

2. The battery module as claimed in claim 1, wherein:
the plurality of battery cells (200) are arranged in a first direction (X), and
the first surface (201) intersects the first direction (X).

3. The battery module as claimed in claim 1 or 2, wherein an area of the at least one first insulating member (300) is larger than an area of the first surface (201).

4. The battery module as claimed in any of the preceding claims, wherein the at least one first insulating member (300) comprises an aerogel, glass fibers, carbon fibers, or ceramic fibers.

5. The battery module as claimed in any of the preceding claims, wherein a thickness of the at least one first insulating member (300) is larger than or equal to 1 mm and smaller than or equal to 4 mm.

6. The battery module as claimed in any of the preceding claims, wherein the at least one first insulating member (300) comprises a plurality of first insulating members, the at least one second insulating member (400) comprises a plurality of second insulating members, and each second insulating member of the plurality of second insulating members extends from one first insulating member of the plurality of first insulating members.

7. The battery module as claimed in claim 6, wherein the plurality of second insulating members are spaced apart from each other.

8. The battery module as claimed in any of the preceding claims, wherein the first extension (410) and the second extension (420) extend from an end of the at least one first insulating member (300).

9. The battery module as claimed in any of the preceding claims, wherein an area of each of the first extension (410) and the second extension (420) is smaller than an area of the second surface (202).

10. The battery module as claimed in any of the preceding claims, wherein the at least one second insulating member (400) further comprises a rupturing groove (440) concavely formed in an outer side surface of the third extension (430).

11. The battery module as claimed in any of the preceding claims, further comprising a fire extinguishing member (600) disposed in the at least one second insulating member (400) and configured to supply a fire extinguishing agent to the battery cell (200) in response to the battery cell being heated to a predetermined temperature or higher.

12. The battery module as claimed in claim 11, wherein the fire extinguishing member (600) comprises a plurality of fire extinguishing capsules (610) filled with the fire extinguishing agent.

13. The battery module as claimed in any one of the preceding claims, wherein:
the battery cell (200) further comprises a third surface (203) opposite to the second surface (202); and
the battery module further comprises a third insulating member (500) extending from the at least one first insulating member (300) and disposed to face the third surface (203).

## Patentansprüche

1. Batteriemodul, umfassend:
ein Gehäuse (100);
eine Vielzahl von Batteriezellen (200), die jeweils in dem Gehäuse (100) angeordnet sind und eine erste Oberfläche (201) und eine zweite Oberfläche (202) umfassen, die sich gegenseitig schneiden;
mindestens ein erstes Isolierelement (300), das der ersten Oberfläche (201) der Batteriezelle (200) zugewandt ist; und
mindestens ein zweites Isolierelement (400), das sich von dem mindestens einen ersten Isolierelement (300) erstreckt und der zweiten Oberfläche (202) der Batteriezelle (200) zugewandt ist, wobei die Batteriezelle (200) weiter eine auf der zweiten Oberfläche (202) angeordnete Entlüftung (34) umfasst, und konfiguriert ist, um im Zusammenhang mit einer Änderung des Innendrucks der Batteriezelle (200) geöffnet und geschlossen zu werden; und
mindestens ein Abschnitt des mindestens einen zweiten Isolierelements (400) der Entlüftung (34) zugewandt ist; **dadurch gekennzeichnet, dass**
das mindestens eine zweite Isolierelement (400) umfasst:
eine erste Erstreckung (410), die sich von dem mindestens einen ersten Isolierelement (300) erstreckt und der zweiten Oberfläche (202) einer beliebigen Batteriezelle einander benachbarter Batteriezellen (200) zugewandt ist;
eine zweite Erstreckung (420), die sich in entgegengesetzter Richtung von der ersten Erstreckung (410) erstreckt und der zweiten Oberfläche (202) der anderen Batteriezelle einander benachbarter Batteriezelle (200) zugewandt ist; und
eine dritte Erstreckung (430), die sich von der ersten Erstreckung (410) erstreckt und der Entlüftung (34) einer beliebigen Batteriezelle einander benachbarter Batteriezellen zugewandt ist.

2. Batteriemodul nach Anspruch 1, wobei:
die Vielzahl von Batteriezellen (200) in einer ersten Richtung (X) angeordnet sind, und die erste Oberfläche (201) die erste Richtung (X) schneidet.

3. Batteriemodul nach Anspruch 1 oder 2, wobei ein Bereich des mindestens einen ersten Isolierelements (300) größer ist als ein Bereich der ersten Oberfläche (201).

4. Batteriemodul nach einem der vorstehenden Ansprüche, wobei das mindestens eine erste Isolierelement (300) ein Aerogel, Glasfasern, Kohlenstofffasern oder Keramikfasern umfasst.

5. Batteriemodul nach einem der vorstehenden Ansprüche, wobei eine Dicke des mindestens einen ersten Isolierelements (300) größer oder gleich 1 mm und kleiner oder gleich 4 mm ist.

6. Batteriemodul nach einem der vorstehenden Ansprüche, wobei das mindestens eine erste Isolierelement (300) eine Vielzahl von ersten Isolierelementen umfasst, das mindestens eine zweite Isolierelement (400) eine Vielzahl von zweiten Isolierelementen umfasst und jedes zweite Isolierelement der Vielzahl von zweiten Isolierelementen sich von einem ersten Isolierelement der Vielzahl von ersten Isolierelementen erstreckt.

7. Batteriemodul nach Anspruch 6, wobei die Vielzahl zweiter Isolierelemente voneinander beabstandet sind.

8. Batteriemodul nach einem der vorstehenden Ansprüche, wobei sich die erste Erstreckung (410) und die zweite Erstreckung (420) von einem Ende des mindestens einen ersten Isolierelements (300) erstrecken.

9. Batteriemodul nach einem der vorstehenden Ansprüche, wobei ein Bereich jeder der ersten Erstreckung (410) und der zweiten Erstreckung (420) kleiner ist als ein Bereich der zweiten Oberfläche (202).

10. Batteriemodul nach einem der vorstehenden Ansprüche, wobei das mindestens eine zweite Isolierelement (400) weiter eine in einer Außenoberfläche der dritten Erstreckung (430) konkav gebildete Berstnut (440) umfasst.

11. Batteriemodul nach einem der vorstehenden Ansprüche, weiter umfassend ein Feuerlöschelement (600), das in dem mindestens einen zweiten Isolierelement (400) angeordnet ist und konfiguriert ist, um der Batteriezelle (200) ein Feuerlöschmittel als Reaktion darauf zuzuführen, dass die Batteriezelle auf eine vorbestimmte Temperatur oder höher erhitzt wird.

12. Batteriemodul nach Anspruch 11, wobei das Feuerlöschelement (600) eine Vielzahl von mit dem Feuerlöschmittel gefüllten Feuerlöschkapseln (610) umfasst.

13. Batteriemodul nach einem der vorstehenden Ansprüche, wobei:
die Batteriezelle (200) weiter eine dritte Oberfläche (203) gegenüber der zweiten Oberfläche (202) umfasst; und
das Batteriemodul weiter ein drittes Isolierelement (500) umfasst, das sich von dem mindestens einen ersten Isolierelement (300) erstreckt und angeordnet ist, um der dritten Oberfläche (203) zugewandt zu sein.

## Revendications

1. Module de batterie comprenant :
un boîtier (100) ;
une pluralité de cellules de batterie (200) chacune disposée dans le boîtier (100) et comprenant une première surface (201) et une deuxième surface (202) qui se coupent ;
au moins un premier élément isolant (300) faisant face à la première surface (201) de la cellule de batterie (200) ; et
au moins un deuxième élément isolant (400) s'étendant depuis le au moins un premier élément isolant (300) et faisant face à la deuxième surface (202) de la cellule de batterie (200), la cellule de batterie (200) comprenant en outre un évent (34) disposé sur la deuxième surface (202) et configuré pour s'ouvrir et se fermer en fonction d'une variation de la pression interne de la cellule de batterie (200) ; et
au moins une partie du au moins un deuxième élément isolant (400) fait face à l'évent (34) ; **caractérisé en ce que**
le au moins un deuxième élément isolant (400) comprend :
une première extension (410) s'étendant depuis le au moins un premier élément isolant (300) et faisant face à la deuxième surface (202) de toute cellule de batterie parmi les cellules de batterie (200) voisines les unes des autres ;
une deuxième extension (420) s'étendant dans une direction opposée à la première extension (410) et faisant face à la deuxième surface (202) de l'autre cellule de batterie parmi les cellules de batterie (200) voisines les unes des autres ; et
une troisième extension (430) s'étendant depuis la première extension (410) et faisant face à l'évent (34) de toute cellule de batterie parmi les cellules de batterie voisines les unes des autres.

2. Module de batterie selon la revendication 1, dans lequel :
la pluralité de cellules de batterie (200) sont agencées dans une première direction (X), et la première surface (201) coupe la première direction (X).

3. Module de batterie selon la revendication 1 ou 2, dans lequel une zone du au moins un premier élément isolant (300) est plus grande qu'une zone de la première surface (201).

4. Module de batterie selon l'une quelconque des revendications précédentes, dans lequel le au moins un premier élément isolant (300) comprend un aérogel, des fibres de verre, des fibres de carbone ou des fibres céramiques.

5. Module de batterie selon l'une quelconque des revendications précédentes, dans lequel l'épaisseur du au moins un premier élément isolant (300) est supérieure ou égale à 1 mm et inférieure ou égale à 4 mm.

6. Module de batterie selon l'une quelconque des revendications précédentes, dans lequel le au moins un premier élément isolant (300) comprend une pluralité de premiers éléments isolants, le au moins un deuxième élément isolant (400) comprend une pluralité de deuxièmes éléments isolants, et chaque deuxième élément isolant parmi la pluralité de deuxièmes éléments isolants s'étend depuis un premier élément isolant parmi la pluralité de premiers éléments isolants.

7. Module de batterie selon la revendication 6, dans lequel la pluralité de deuxièmes éléments isolants sont espacés les uns des autres.

8. Module de batterie selon l'une quelconque des revendications précédentes, dans lequel la première extension (410) et la deuxième extension (420) s'étendent depuis une extrémité du au moins un premier élément isolant (300).

9. Module de batterie selon l'une quelconque des revendications précédentes, dans lequel une zone de chacune parmi la première extension (410) et la deuxième extension (420) est plus petite qu'une zone de la deuxième surface (202).

10. Module de batterie selon l'une quelconque des revendications précédentes, dans lequel le au moins un deuxième élément isolant (400) comprend en outre une rainure de rupture (440) formée de manière concave dans une surface latérale extérieure de la troisième extension (430).

11. Module de batterie selon l'une quelconque des revendications précédentes, comprenant en outre un élément extincteur (600) disposé dans le au moins un deuxième élément isolant (400) et configuré pour fournir un agent extincteur à la cellule de batterie (200) en réponse au chauffage de la cellule de batterie à une température prédéterminée ou plus élevée.

12. Module de batterie selon la revendication 11, dans lequel l'élément extincteur (600) comprend une pluralité de capsules d'extincteur (610) remplies de l'agent extincteur.

13. Module de batterie selon l'une quelconque des revendications précédentes, dans lequel :
la cellule de batterie (200) comprend en outre une troisième surface (203) opposée à la deuxième surface (202) ; et
le module de batterie comprend en outre un troisième élément isolant (500) s'étendant depuis le au moins un premier élément isolant (300) et disposé pour faire face à la troisième surface (203).
